(19)

Europäisches
Patentamt

European
Patent Office

Office européen
des brevets

(11) **EP 3 018 627 A1**

(12) **EUROPEAN PATENT APPLICATION**

(43) Date of publication:
**11.05.2016 Bulletin 2016/19**

(51) Int Cl.:
*G06T 7/00* (2006.01)      *G06K 9/46* (2006.01)

(21) Application number: **15192666.4**

(22) Date of filing: **03.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.11.2014 GB 201419608**

(71) Applicant: **Nokia Technologies Oy
02610 Espoo (FI)**

(72) Inventors:
 • **WANG, Tinghuai
  33720 Tampere (FI)**
 • **WANG, Huiling
  33720 Tampere (FI)**

(74) Representative: **Tampereen Patenttitoimisto Oy
Visiokatu 1
33720 Tampere (FI)**

(54) **A METHOD AND AN APPARATUS FOR AUTOMATIC SEGMENTATION OF AN OBJECT**

(57) The invention relates to a method, comprising: receiving a plurality of images, wherein the plurality of images comprises content that relates to a same object; preprocessing said more than one images to form a feature vector for each region in an image; discovering object-like regions from each image by means of the feature vectors; determining an object appearance model for each image according to the object-like regions; generating an object hypotheses by means of the object appearance model; segmenting the same object in the plurality of images to generate segmented objects; and generating a multiple view segmentation according to the segmented objects.

Fig. 4

**Description**

Technical Field

The present embodiments relate generally to image processing. In particular, the present embodiments relate to segmentation of an object from multiple images.

Background

Multi-camera systems is an emerging technology for the acquisition of 3D (three-dimensional) assets in imaging and media production industry, e.g. photography, movie and game production. With the proliferation of handheld imaging devices, such as camcorders and mobile phones, automatic segmentation of the same object from images synchronously taken by multiple cameras is a way to capture 3D content.

Summary

Various embodiments of the invention include a method, an apparatus, a system, and a computer readable medium comprising a computer program stored therein, which are characterized by what is stated in the independent claims. Various embodiments of the invention are disclosed in the dependent claims.

According to a first example, a method comprises receiving a plurality of images, wherein the plurality of images comprises content that relates to a same object; preprocessing said more than one images to form a feature vector for each region in an image; discovering object-like regions from each image by means of the feature vectors; determining an object appearance model for each image according to the object-like regions; generating an object hypotheses by means of the object appearance model; segmenting the same object in the plurality of images to generate segmented objects; and generating a multiple view segmentation according to the segmented objects.

According to an embodiment, the plurality of images are received from more than one camera devices.

According to an embodiment, the preprocessing comprises performing region extraction for the plurality of images.

According to an embodiment, the preprocessing further comprises performing structure from motion technique in the plurality of images to reconstruct sparse 3D points.

According to an embodiment, the step for discovering object-like regions from each image by means of the feature vectors comprises forming a pool comprising a predefined amount of highest-scoring regions from the plurality of images, wherein a score of a region comprises an appearance score of each region and a visibility of a region based on reconstructed sparse 3D points; determining a visibility of a region by accumulating the number of 3D points that the region in question encompasses; identifying the object-like regions that represents a foreground object by performing a spectral clustering.

According to an embodiment, the generating the object hypothesis comprises determining a level of objectness of regions in the plurality of images; adding the grouped regions with the highest level of objectness per frame to the set of object hypotheses.

According to an embodiment, the segmenting comprises determining a likelihood of a region belonging to the object, segmenting the object based on the likelihood.

According to a second example, an apparatus comprises at least one processor, memory including computer program code, the memory and the computer program code configured to, with the at least one processor, cause the apparatus to perform at least the following: receiving a plurality of images, wherein the plurality of images comprises content that relates to a same object; preprocessing said more than one images to form a feature vector for each region in an image; discovering object-like regions from each image by means of the feature vectors; determining an object appearance model for each image according to the object-like regions; generating an object hypotheses by means of the object appearance model; and segmenting the same object in the plurality of images to generate segmented object; and generating a multiple view segmentation according to segmented objects.

According to a third example, a system comprises at least one processor, memory including computer program code, the memory and the computer program code configured to, with the at least one processor, cause the system to perform at least the following: receiving a plurality of images, wherein the plurality of images comprises content that relates to a same object; preprocessing said more than one images to form a feature vector for each region in an image; discovering object-like regions from each image by means of the feature vectors; determining an object appearance model for each image according to the object-like regions; generating an object hypotheses by means of the object appearance model; and segmenting the same object in the plurality of images to generate segmented objects; and generating a multiple view segmentation according to segmented objects.

According to a fourth example, an apparatus comprises: means for receiving a plurality of images, wherein the plurality of images comprises content that relates to a same object; means for preprocessing said more than one images to form a feature vector for each region in an image; means for discovering object-like regions from each image by means of the feature vectors; means for determining an object appearance model for each image according to the object-like regions; means for generating an object hypotheses by means of the object appearance model; and means for segmenting the same object in the plurality of images to generated segmented objects; and means for generating a multiple view segmentation according to segmented objects.

According to a fifth example, a computer program product embodied on a non-transitory computer readable medium, comprising computer program code configured to, when executed on at least one processor, cause an apparatus or a system to: receive a plurality of images, wherein the plurality of images comprises content that relates to a same object; preprocess said more than one images to form a feature vector for each region in an image; discover object-like regions from each image by means of the feature vectors; determine an object appearance model for each image according to the object-like regions; generate an object hypotheses by means of the object appearance model; and segment the same object in the plurality of images to generate segmented objects; and generate a multiple view segmentation according to segmented objects.

Description of the Drawings

In the following, various embodiments of the invention will be described in more detail with reference to the appended drawings, in which

Fig. 1          shows an apparatus according to an embodiment;

Fig. 2          shows a layout of an apparatus according to an embodiment;

Fig. 3          shows a system according to an embodiment;

Fig. 4          shows a method according to an embodiment;

Figs. 5a-d      show examples of image processing;

Fig. 6          shows an example of sparse 3D reconstruction and rough camera pose; and

Fig. 7          illustrates an embodiment of a method as a flowchart.

Description of Example Embodiments

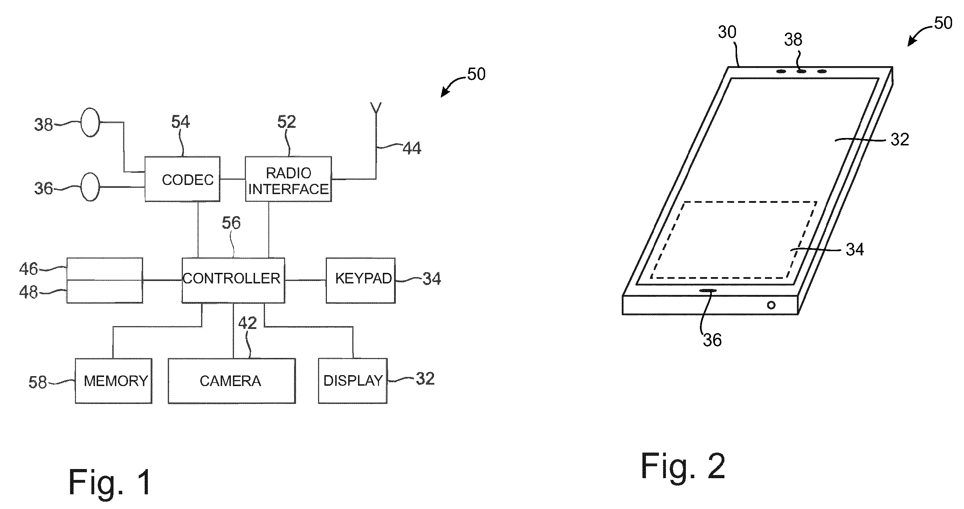

Figures 1 and 2 illustrate an apparatus according to an embodiment. The apparatus 50 is an electronic device for example a mobile terminal or a user equipment of a wireless communication system or a camera device. The embodiments disclosed in this application can be implemented within any electronic device or apparatus which is able to capture digital images, such as still images and/or video images, and is connectable to a network. The apparatus 50 may comprise a housing 30 for incorporating and protecting the device. The apparatus 50 further may comprise a display 32, for example, a liquid crystal display or any other display technology capable of displaying images and/or videos. The apparatus 50 may further comprise a keypad 34. According to another embodiment, any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device, which may be any of the following: an earpiece 38, a speaker or an analogue audio or digital audio output connection. The apparatus 50 may also comprise a battery (according to another embodiment, the device may be powered by any suitable mobile energy device, such as solar cell, fuel cell or clockwork generator). The apparatus may comprise a camera 42 capable of recording or capturing images and/or video, or may be connected to one. According to an embodiment, the apparatus 50 may further comprise an infrared port for short range line of sight communication to other devices. According to an embodiment, the apparatus 50 may further comprise any suitable short range communication solution such as for example a Bluetooth wireless connection or a USB/firewire wired solution.

The apparatus 50 may comprise a controller 56 or processor for controlling the apparatus. The controller 56 may be connected to memory 58 which, according to an embodiment, may store both data in the form of image and audio data and/or may also store instructions for implementation on the controller 56. The controller 56 may further be connected to codec circuitry 54 suitable for carrying out coding and decoding or audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

According to an embodiment, the apparatus 50 comprises a camera 42 capable of recording or detecting individual frames which are then passed to the codec 54 or controller for processing. According to an embodiment, the apparatus may receive the video image data for processing from another device prior to transmission and/or storage. According to an embodiment, the apparatus 50 may receive the images for processing either wirelessly or by a wired connection.

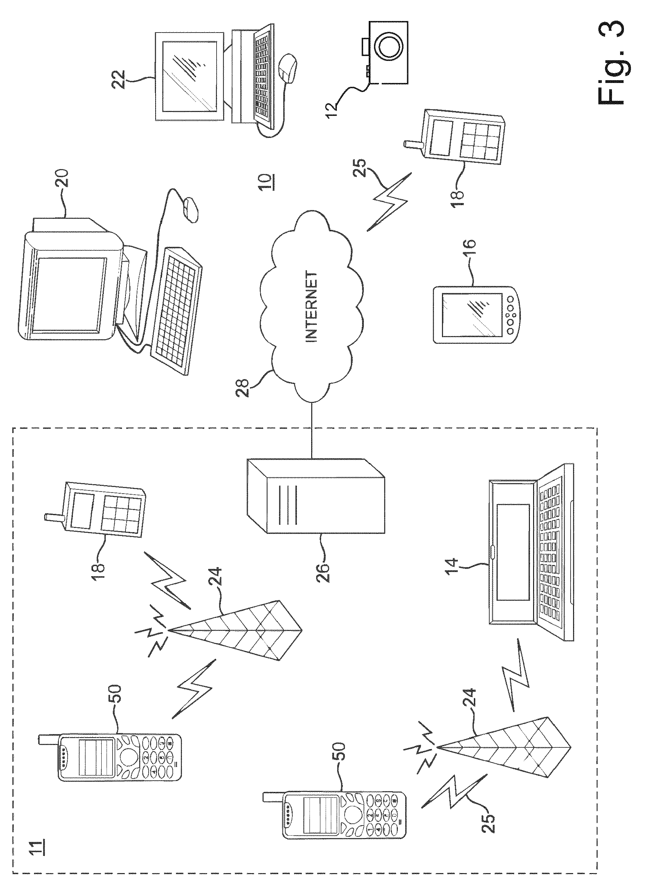

Figure 3 shows a system configuration comprising a plurality of apparatuses, networks and network elements according to an embodiment. The system 10 comprises multiple communication devices which can communicate through one or more networks. The system 10 may comprise any combination of wired or wireless networks including, but not limited to a wireless cellular telephone network (such as a GSM, UMTS, CDMA network, etc.), a wireless local area network (WLAN), such as defined by any of the IEEE 802.x standards, a Bluetooth personal area network, an Ethernet local area network, a token ring local area network, a wide area network, and the internet.

The system 10 may include both wired and wireless communication devices or apparatus 50 suitable for implementing present embodiments. For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a digital camera 12. The apparatus 50 may be stationary or mobile when carried by an individual who is moving. The apparatus 50 may also be located in a mode of transport.

Some of further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telephone system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio infrared, laser, cable connections or any suitable connection.

The present embodiments relate to automatic segmentation of an object from images captured by multiple hand-held cameras. The images are received by a server from several cameras, and the server is configured to perform the automatic segmentation of an object. The server does not need to know the accurate camera poses or orientation, or object/background color distribution. Segmentation from multiple images of the same object has been in the glare of interest, however, it has been remained unsolved. The segmentation often necessitates use of distinctly coloured (chroma-key) backgrounds, which limit practical scenarios for 3D content capture.

Automatic multiple image segmentation methods of related art do not work in the scenario of hand-held cameras due to strong assumption such as i) the exact camera poses are known; ii) cameras fixate on object; or iii) object and background color distributions do not overlap, in which case having a global color model for the object and background may be sufficient. The first two assumptions (i) and ii)) can be satisfied in the studio setup, however, they are impractical in the hand-held cameras scenario because the exact camera poses are difficult to acquire due to the sparseness and movement of capturing devices. The last assumption (iii)) is also a limiting factor of existing methods from being employed in natural images, lacking an object-level description of the object of interest.

The present embodiments propose an automatic method to segment the same object captured by multiple imaging device, which differs from the solutions of related technology mainly in the following aspects: 1) the embodiments can be used to segment images taken by both hand-held cameras or fixed cameras in studio; 2) the embodiments do not require exact camera pose information; 3) the embodiments do not require background images to generate background model; and 4) the embodiments have an object-level description of the object of interest to cope with similar object and background color distributions.

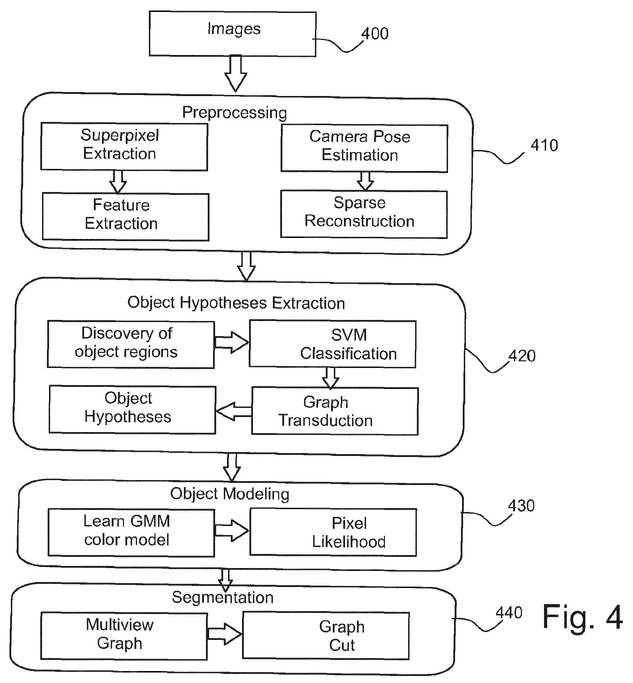

Figure 4 illustrates a pipeline according to an embodiment being located on a server. The pipeline comprises a preprocessing module 410, an object hypotheses extraction module 420, an object modelling module 430 and a segmentation module 440. Images 400 from multiple cameras are received by the preprocessing module 410. Alternatively, images 400 are received from one camera. The preprocessing module 410 receives more than one image, which more than one image has a content that relates to a same object. For example, the object may be a building, a person, an attraction, a statue, a vehicle, etc. Thus, more than one images comprises such object (e.g. the building, the person, the attraction, the statue, the vehicle, etc.) as content, but such object being captured from different angles of view of such object.

The images can be received substantially at the same time. The images are stored at the server with a metadata. The metadata comprises at least a time stamp indicating the capturing time for the image. The preprocessing module 410 is configured to perform superpixel extraction and feature extraction for each image, as well as camera pose extraction and sparse reconstruction. The processed images are then passed to the object hypotheses extraction module 420. The object hypotheses extraction module 420 is configured to discover object regions from each image and to perform support vector machine (SVM) classification. Further a graph transduction is performed on each image and object hypotheses is generated. The outcome from object hypotheses extraction module 420 is passed to object modelling module 430 being configured to examine gaussian mixture models (GMM) color model and generate pixel likelihood for the images. At last, the segmentation module 440 is configured to create a multiview graph and perform graph cut optimization. The multiview graph and graph cut optimization are stored in the server for later use, e.g. in different applications. It is appreciated that the modules presented here do not require exact camera pose information. The functionalities of the modules 410-440 are described in more detailed manner next.

1. Preprocessing

The preprocessing module 410 is configured to receive images 400 captured by multiple imaging device as input. The images may be synchronously captured. The preprocessing module 410 then performs superpixel/regions extraction as the first step to parse each image into perceptually meaningful atomic entities. Superpixels are more spatially extended entities than low-level interest point based features which provide a convenient primitive to compute image features, and greatly reduces the complexity of subsequent image processing tasks. Any superpixel/region extraction methods can be used to implement the preprocessing module. In a superpixel extraction method, at first a model of the object's colour may be learned from the image pixels around the fixation points. Then image edges may be extracted and combined with the object colour information in a volumetric binary markov random fields (MRF) model.

To characterize the visual appearance of regions, the preprocessing module is also configured to determine feature descriptors for each region. Two types of may be used: texton histograms (TH) and color histograms (CH). For TH, a filter bank with 18 bar and edge filters (6 orientations and 3 scales for each), 1 Gaussian and 1 Laplacian-of-Gaussian filters, is used. 400 textons (bins) are quantized via k-means. For CH, CIE Lab color space with 20 bins per channels (60 bins in total) may be used. All histograms are concatenated to form a single features vector for each regions.

The preprocessing module is further configured to perform structure from motion (SfM) technique in all images to reconstruct sparse 3D points based on camera pose estimation. In SfM three-dimensional structures are estimated from two-dimensional image sequences, which may be coupled with local motion signals. It is noticed that the camera pose estimation does not need to indicate exact camera pose.

The preprocessing module provides as an outcome both feature vectors (of all superpixels from multiple images) and sparse 3D points.

2. Object hypotheses extraction module

The object hypotheses extraction module is configured to perform the following functionalities for the processed images: discovering object regions; learning a holistic appearance model; and transduction learning to generate object hypotheses.

Discovery of object regions

The goal of the discovery of object regions is to discover an initial set of object-like regions from all views. Throughout the discovery process, two disjoint sets of image regions are maintained. These two disjoint sets of image regions are referred to by $H$ and $U$, where $H$ represent the discovered object-like regions, and $U$ represent those remaining in the general unlabeled pool. $H$ is initially empty, whilst $U$ is set to be the regions of all images. Since there is no prior knowledge on the size, shape, appearance or location of the primary object, the present algorithm operates by producing a diverse set of object-like regions in the image. This can be done by using a method known from "Ian Endres, Derek Hoiem: Category Independent Object Proposals. ECCV (5) 2010: 575-588", which is a category independent method to identify object-like regions. The publication discloses the main steps for the method, which are (1) to generate image regions from a hierarchical segmentation as the building blocks; (2) to select potential object seeds from regions based on size and boundary strength; (3) to run several conditional random field (CRF) segmentations with random chosen seeds; and (4) to rank regions based on features such as boundary probability, background probability, color/texture histogram intersection with local/global background etc.

According to an embodiment, to find the most likely object-like regions among the large set of returned regions, first a candidate pool C is formed by taking the top $N$ ($N=30$, for example) highest-scoring regions from each image. The score of each regions comprises two parts: 1) an appearance score $App_r$ of each region r returned from the method by "Ian Endres, Derek Hoiem: Category Independent Object Proposals. ECCV (5) 2010: 575-588"; and 2) the visibility $Vis_r$ of each region $r$ based on the sparse 3D reconstruction. Specifically, each 3D point from SfM has a number of measures, with each measure representing its visibility, 2D location and photometric properties on the corresponding view. Thus, the visibility of each region $r$ is determined by accumulating the number of 3D measures that region $r$ encompasses. Let $P_r$ be the set of 3D points which have measures encompassed by region $r$ in view $v$. Let $n_p$ be the number of measures for each 3D point $p \in P_r$. The visibility of region $r$ can be determined as

$$Vis_r = 1 - \exp\left(-\frac{\sum_{p \in P_r} n_p}{\left|\sum_{p \in P} n_p\right|}\right)$$

where $P$ represents all the 3D points and $\sum_{p \in P} n_p$ is the average visibility (number of measures) of all 3D points. This definition of region visibility takes into account of not only the number of visible 3D points in region $r$ (in view $v$), but also the overall visibility of each 3D points. The total score is the summation of appearance and visibility of each region.

Then groups of object-like regions are identified, which object-like regions may represent a foreground object by performing spectral clustering in $C$. To perform clustering, at first the pairwise affinity matrix is determined between all regions $r_i$ and $r_j \in C$ as

$$D(r_i, r_j) = \exp\left(-\frac{x^2\left(h_a(r_i), h_a(r_j)\right)}{2\beta}\right) \qquad \text{(Equation 1)}$$

where $h_a(r_i)$ and $h_a(r_j)$ are the feature vectors of $r_i$ and $r_j$ respectively, computed in the preprocessing module 410, and $\beta$ is the average $X^2$ distance between all regions. All clusters are ranked based on the average score of its comprising regions. The clusters among the highest ranks correspond to the most object-like regions but there may also be noisy regions which are added to $H$.

Holistic appearance model

Each object-like region may correspond to different part of the primary object from particular image, whereas they collectively describe the primary object. A discriminative model to learn the appearance of the most likely object regions is determined. The initial set of object-like regions $H$ form the set of all instances with a positive label (denoted as $P$), while negative regions ($N$) are randomly sampled outside the bounding box of the positive example. This labeled training set is used to learn linear SVM classifier for two categories. The classifier provides a confidence of class membership taking as input the features of a region which combines the texture and color features. This classifier is then applied to all the unlabeled regions across all the images. After this classification process, each unlabeled region $i$ is assigned with a weight $Yi$, i.e. SVM margin. All weights are normalized between -1 and 1, by the sum of positive and negative margins.

Generating multiple view object hypotheses

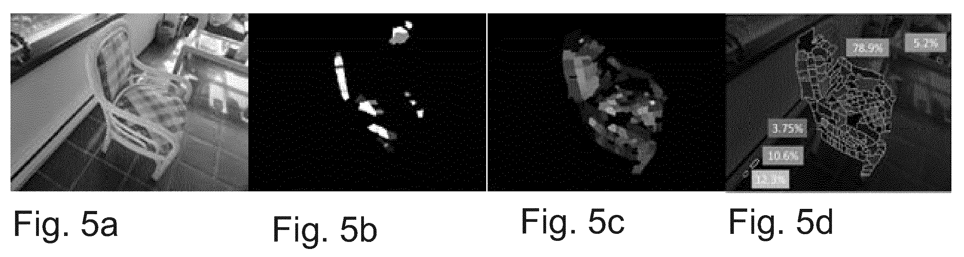

The holistic object model provides an informative yet independent and incoherent prediction on each of the unlabeled regions regardless the inherent structure revealed by both labeled and unlabeled regions. To generate robust multiple view object hypotheses, a graph transduction learning approach is adopted, exploiting the intrinsic structure within data, multiple view geometry and the initial local evidence from the holistic object appearance model. Figure 5a shows a source image. Figure 5b shows the positive predictions of each region from SVM. Figure 5c illustrates predictions from graph transduction capturing the coherent intrinsic structure within visual data using SVM predictions as input. The prediction from SVM exhibits unappealing incoherence, nonetheless, using it as initial input, graph transduction gives smooth predictions exploiting the inherent structure of data, as shown in Figure 5c. Figure 5d illustrates generated object hypotheses with average objectness values indicated by the brightness.

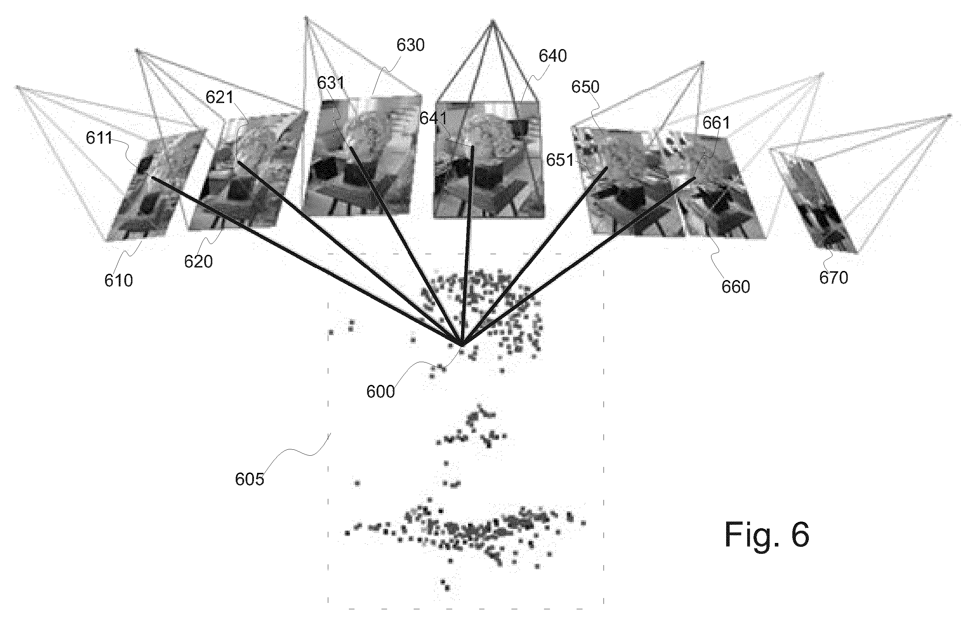

To perform transduction learning, a weighted graph $G_S = (\nu, \varepsilon)$ is defined, which weighted graph is spanning all the views with each node corresponding to a region, and each edge connecting two regions based on intra-view and inter-view adjacencies. Intra-view adjacency is defined as the spatial adjacency of regions in the same view whilst inter-view adjacency is coarsely determined based on the visibility of reconstructed sparse 3D points from the preprocessing module. Specifically, the regions which contain 2D projections (2D feature points) of the same 3D point are adjacent. Figure 6 illustrates sparse 3D reconstruction and rough camera pose using Structure from Motion (SfM). Regions or pixels in views containing the 2D projection of the same 3D point are deemed adjacent in the graph.

The affinity matrix $W$ of the graph using the feature histogram representation $h_{r_i}$ of each region $r_i$ as

$$W_{ij} = \exp(-\frac{x^2\left(h_{r_i}, h_{r_j}\right)}{2\beta})$$

where $\beta$ is the average chi-squared distance between all adjacent regions. Since sparsity is important to remove label noise and semi-supervised learning algorithms are more robust on sparse graphs, all $W_{ij}$ are set to zero if $r_i$ and $r_j$ are not adjacent.

Graph transduction learning propagates label information from labeled nodes to unlabeled nodes. Let the node degree matrix $D=diag([d_1, ...,d_N])$ be defined as $D_i = \sum_{j=1}^{N} W_{ij}$, where $N=|\nu|$. An energy function $E(X)$ is minimized with respect to all regions labels $X$.

$$E(X) = \sum_{i,j=1}^{N} W_{ij} \left| \frac{x_i}{\sqrt{D_i}} - \frac{X_j}{\sqrt{D_j}} \right|^2 + \mu \sum_{i=1}^{N} |X_i - Y_i|^2 \qquad \text{(Equation 2)}$$

where $\mu>0$ is the regularization parameter and $Y$ are the desirable labels of nodes which are imposed by prior knowledge in related technology. The first term in (Equation 2) is the smoothness constraint, which encourages the coherence of labelling among adjacent nodes, whilst the second term is the fitting constraint which enforces the labelling to be similar with the initial label assignment. The present embodiments solve this optimization as a linear system of equations. Differentiating $E(X)$ with respect to $X$:

$$\frac{\partial E(X)}{\partial X}\bigg|_{X=X^*} = X^* - SX^* + \mu(X^* - Y) = 0$$

Denoting $\gamma = \frac{\mu}{1+\mu}$ , then $(I - (1 - \gamma)S)X^* = \gamma Y$. An optimal solution for $X$ can be solved using the Conjugate Gradient method with very fast convergence.

Predictions from SVM classifier ($-1 \leq Y \leq 1$) are used to assign the values of $Y$. The diffusion process can be performed for positive and negative labels separately, with initial labels $Y$ in (Equation 2) substituted as $Y_+$ and $Y_-$ respectively:

$$Y_+ = \begin{cases} Y, & \text{if } Y > 0 \\ 0, & \text{otherwise} \end{cases}$$

and

$$Y_- = \begin{cases} -Y, & \text{if } Y < 0 \\ 0, & \text{otherwise} \end{cases}.$$

The embodiments propose to combine the diffusion processes of both the object-like regions and background. The present embodiments can produce more efficient and coherent prediction, taking advantage of the complementary properties of the object-like regions and background. The optimization for two diffusion processes is performed simultaneously as follows:

$$X^* = \gamma(I - (1 - \gamma)S)^{-1}(Y_+ - Y_-).$$

This enables a faster and stable optimization avoiding separate optimizations while giving equivalent results to the individual positive and negative label diffusion. Finally, the regions which are assigned with label $X > 0$ from each image are grouped. Specifically, the final label $X$ is used to indicate the level of objectness of each region. The final hypotheses are generated by grouping the spatially adjacent regions ($X > 0$), and assigned by an objectness value by averaging the constituent region-wise objectness $X$ weighted by area. The grouped regions with the highest objectness per frame are added to the set of object hypotheses $P$. Examples of generated object hypotheses are shown in Figure 5(d).

3. Multiple view segmentation

Multiple view segmentation is formulated as a pixel-labelling problem of assigning each pixel with a binary value which represents background or foreground (object) respectively. A graph is defined by connecting pixels spatially corresponding to the same 3D sparse points, which is similar to the region-based graph case in previous section "Object hypotheses extraction module": See Fig. 6 for an illustrative description, where Figure 6 shows sparse 3D reconstruction and rough camera pose using structure from motion (SfM). Figure 6 illustrates a plurality of images 610, 620, 630, 640, 650, 660, 670 comprising the same object as content. A pixel 600 represents the same 3D point 611, 621, 631, 641, 651, 661 in the plurality of images 610, 620, 630, 640, 650, 660. Regions or pixels in view containing the 2D projection of the same 3D point are deemed adjacent in the graph 605. In contrast to the previous graph during transduction learning, each of the nodes in this graph 605 is a pixel (e.g. 600) as opposed to a region. An energy function is defined that minimizes to achieve the optimal labelling using Graph Cut:

$$E(x) = \sum_{i \in v} \psi_i(x_i) + \lambda \sum_{i \in v, j \in N_i} \psi_{i,j}(x_i, x_j)$$

where $N_i$ is the set of pixels adjacent to pixel i in the graph and $\lambda$ is a parameter. The pairwise term $\psi_{i,j}(x_i, x_j)$ penalizes different labels assigned to adjacent pixels:

$$\psi_{i,j}(x_i, x_j) = [x_i \neq x_j] \exp(-d(x_i, x_j))$$

where [.] denotes the indicator function. The function $d(x_i; x_j)$ computes the color and edge distance between neighboring pixels.

$$d(x_1, x_j) = \beta(1 + |SE(x_i) - SE(x_j)|) \cdot \|c_i - c_j\|^2$$

where $SE(x_i)$ ($SE(x_i) \in [0,1]$) returns the edge probability provided by the Structured Edge (SE) detector, $\|c_i - c_j\|^2$ is the squared Euclidean distance between two adjacent pixels in CIE Lab colorspace, and $\beta = (2 < \|c_i - c_j\|^2>)^{-1}$ denoting the expectation.

The unary term $\psi_i(x_i)$ defines the cost of assigning label $x_i \in \{0,1\}$ to pixel $i$, which is defined based on the per-pixel probability map by combining color distribution and regions objectness.

$$\psi_i(x_i) = -\log\big(\omega \cdot U_i^c(x_i) + (1 - \omega) \cdot U_i^o(x_i)\big)$$

where $U_i^c(\cdot)$ is the color likelihood and $U_i^o(\cdot)$ is the objectness cue. The definitions of these two terms are explained in more detailed next.

To model the appearance of the object and background, two gaussian mixture models (GMM) are estimated in CIE Lab colourspace. Pixels belonging to the set of object hypotheses are used to train the GMM representing the primary object, whilst randomly sampled pixels in the complement of object hypotheses are adopted to train the GMM for the background. Given these GMM color models, per-pixel probability $U_i^c(\cdot)$ is defined as the likelihood observing each pixel as object or background respectively can be computed.

Extracted object hypotheses provide explicit information of how likely a region belongs to the primary object (objectness) which can be directly used to drive the final segmentation. Per-pixel likelihood $U_i^o(\cdot)$ is set to be related to the objectness value *(X)* in chapter *"Object hypotheses extraction module"*) of the region it belongs to:

$$U_i^o(x_i) = \begin{cases} X, & if\ x_i = 1 \\ 1 - X, & if\ x_i = 0 \end{cases}$$

The multiple view segmentation results provide images with a segmented object, which is the same object from different perspectives. The segmentation results can then be used in photography, in movie production and game production.

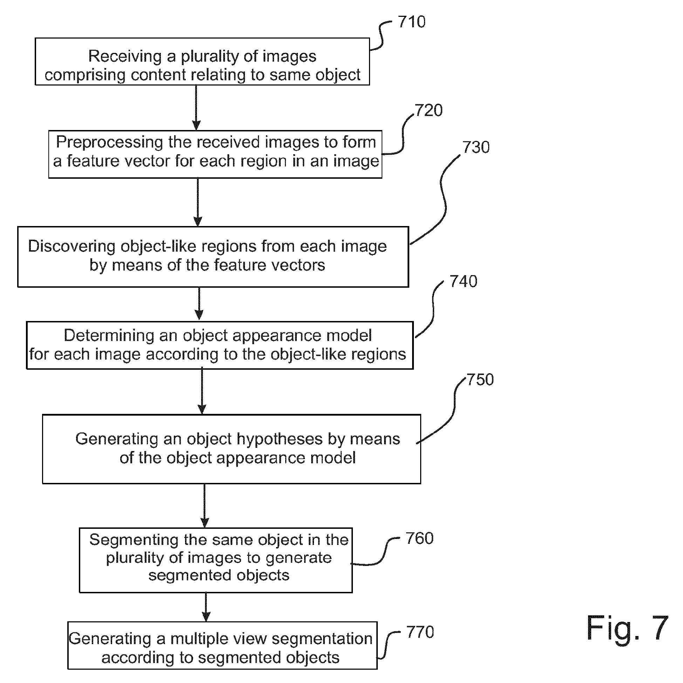

Figure 7 illustrates an embodiment of a method as a flowchart. The method comprises

- receiving a plurality of images, wherein the plurality of images comprises content that relates to a same object 710;
- preprocessing said more than one images to form a feature vector for each region in an image 720;
- discovering object-like regions from each image by means of the feature vectors 730;
- determining an object appearance model for each image according to the object-like regions 740;
- generating an object hypotheses by means of the object appearance model 750;
- segmenting the same object in the plurality of images to generate segmented objects 760; and
- generating a multiple view segmentation according to segmented objects 770.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

The present invention may not be limited solely to the above-presented embodiments, but it can be modified within the scope of the appended claims.

**Claims**

1. A method, comprising:

- receiving a plurality of images, wherein the plurality of images comprises content that relates to a same object;
- preprocessing said more than one images to form a feature vector for each region in an image;
- discovering object-like regions from each image based on the feature vectors;
- determining an object appearance model for each image according to the object-like regions;
- generating an object hypotheses- based on the object appearance model;
- segmenting the same object in the plurality of images to generate segmented objects; and
- generating a multiple view segmentation according to the segmented objects.

**2.** The method according to claim 1, wherein the plurality of images are received from more than one camera devices.

**3.** The method according to claim 1 or 2, wherein the preprocessing comprises performing region extraction for the plurality of images.

**4.** The method according to claim 1 or 2 or 3, wherein the preprocessing further comprises performing structure from motion technique in the plurality of images to reconstruct sparse three dimensional (3D) points.

**5.** The method according to claim 4, wherein the discovering object-like regions from each image by means of the feature vectors comprises:

- forming a pool comprising a predefined amount of highest-scoring regions from the plurality of images, wherein a score of a region comprises an appearance score of each region and a visibility of a region based on reconstructed sparse 3D points;
- determining a visibility of a region by accumulating the number of 3D points that the region in question encompasses; and
- identifying the object-like regions that represents a foreground object by performing a spectral clustering.

**6.** The method according to any of the claims 1 to 5, wherein generating the object hypothesis comprises

- determining a level of objectness of regions in the plurality of images; and
- adding the grouped regions with the highest level of objectness per frame to the set of object hypotheses.

**7.** The method according to any of the claims 1 to 6, wherein the segmenting comprises:

- determining a likelihood of a region belonging to the object; and
- segmenting the object based on the likelihood.

**8.** An apparatus configured to:

- receive a plurality of images, wherein the plurality of images comprises content that relates to a same object;
- preprocess said more than one images to form a feature vector for each region in an image;
- discover object-like regions from each image based on the feature vectors;
- determine an object appearance model for each image according to the object-like regions;
- generate an object hypotheses mbased on the object appearance model;
- segment the same object in the plurality of images to generate segmented object; and
- generate a multiple view segmentation according to segmented objects.

**9.** The apparatus according to claim 8, wherein the apparatus comprises more than one camera devices.

**10.** The apparatus according to claim 8 or 9, wherein the apparatus comprises a mobile device.

**11.** The apparatus according to claim 8 to 10, wherein the apparatus is further configured to perform the methods as claimed in any of the claims 2 to 7.

**12.** A computer program product embodied on a non-transitory computer readable medium, comprising computer program code, which when executed on at least one processor, cause an apparatus to perform the methods as claimed in any of the claims 1 to 7.

Fig. 2

Fig. 1

Fig. 3

```
                          ┌──────────────────────┐
                          │        Images        │────400
                          └──────────────────────┘
                                    ↓
         ╭─────────────────────────────────────────────────────────╮
         │                    Preprocessing                        │
         │  ┌──────────────────┐        ┌──────────────────┐       │
         │  │    Superpixel    │        │   Camera Pose    │       │───410
         │  │    Extraction    │        │    Estimation    │       │
         │  └──────────────────┘        └──────────────────┘       │
         │           ↓                           ↓                 │
         │  ┌──────────────────┐        ┌──────────────────┐       │
         │  │     Feature      │        │      Sparse      │       │
         │  │    Extraction    │        │  Reconstruction  │       │
         │  └──────────────────┘        └──────────────────┘       │
         ╰─────────────────────────────────────────────────────────╯
                                    ↓
         ╭─────────────────────────────────────────────────────────╮
         │              Object Hypotheses Extraction               │
         │  ┌──────────────────┐   ⇒    ┌──────────────────┐       │
         │  │   Discovery of   │        │       SVM        │       │───420
         │  │  object regions  │        │  Classification  │       │
         │  └──────────────────┘        └──────────────────┘       │
         │                                       ↓                 │
         │  ┌──────────────────┐   ⇐    ┌──────────────────┐       │
         │  │      Object      │        │      Graph       │       │
         │  │    Hypotheses    │        │   Transduction   │       │
         │  └──────────────────┘        └──────────────────┘       │
         ╰─────────────────────────────────────────────────────────╯
                                    ↓
         ╭─────────────────────────────────────────────────────────╮
         │                   Object Modeling                       │
         │  ┌──────────────────┐   ⇒    ┌──────────────────┐       │───430
         │  │    Learn GMM     │        │      Pixel       │       │
         │  │   color model    │        │    Likelihood    │       │
         │  └──────────────────┘        └──────────────────┘       │
         ╰─────────────────────────────────────────────────────────╯
                                    ↓
         ╭─────────────────────────────────────────────────────────╮
         │                    Segmentation                         │
         │  ┌──────────────────┐   ⇒    ┌──────────────────┐       │───440
         │  │    Multiview     │        │      Graph       │       │
         │  │      Graph       │        │       Cut        │       │
         │  └──────────────────┘        └──────────────────┘       │
         ╰─────────────────────────────────────────────────────────╯
```

Fig. 4

Fig. 5a    Fig. 5b    Fig. 5c    Fig. 5d

Fig. 6

Receiving a plurality of images
comprising content relating to same object
┌ 710

Preprocessing the received images to form
a feature vector for each region in an image
┌ 720

┌ 730

Discovering object-like regions from each image
by means of the feature vectors

┌ 740

Determining an object appearance model
for each image according to the object-like regions

┌ 750

Generating an object hypotheses by means
of the object appearance model

Segmenting the same object in the
plurality of images to generate
segmented objects
┌ 760

Generating a multiple view segmentation
according to segmented objects
┌ 770

Fig. 7

Europäisches
Patentamt

European
Patent Office

Office européen
des brevets

# EUROPEAN SEARCH REPORT

Application Number

EP 15 19 2666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANXIONG XIAO ET AL: "Multiple view semantic segmentation for street view images", COMPUTER VISION, 2009 IEEE 12TH INTERNATIONAL CONFERENCE ON, IEEE, PISCATAWAY, NJ, USA, 29 September 2009 (2009-09-29), pages 686-693, XP031672579, ISBN: 978-1-4244-4420-5 * page 687, left-hand column, lines 14-15 * * page 688, left-hand column, line 5 - line 11 * * equation 2 * * equation 1 * * page 689, left-hand column, line 3 * * page 687, right-hand column, penultimate paragrah * * figure 9 * * page 686, right-hand column, last paragraph * ----- -/-- | 1,2,4, 8-12 | INV. G06T7/00 G06K9/46 |

TECHNICAL FIELDS
SEARCHED (IPC)

G06T
G06K

The present search report has been drawn up for all claims

| Place of search | Date of completion of the search | Examiner |
|---|---|---|
| Munich | 26 February 2016 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 19 2666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DJELOUAH ABDELAZIZ ET AL: "Multi-view Object Segmentation in Space and Time", 2013 IEEE INTERNATIONAL CONFERENCE ON COMPUTER VISION, IEEE, 1 December 2013 (2013-12-01), pages 2640-2647, XP032573177, ISSN: 1550-5499, DOI: 10.1109/ICCV.2013.328 [retrieved on 2014-02-28] * abstract * * page 2642, left-hand column, line 21 - line 22 * * equation 8 * * page 2642, left-hand column, lines 14,15,22-28 * * page 2642, left-hand column, line 15 - line 17 * * page 2644, right-hand column, line 8 - line 11 * * figure 2 * ----- -/-- | 1-3,7-12 | |

TECHNICAL FIELDS
SEARCHED (IPC)

The present search report has been drawn up for all claims

| Place of search | Date of completion of the search | Examiner |
|---|---|---|
| Munich | 26 February 2016 | Winkler, Gregor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................................
& : member of the same patent family, corresponding
document

EPO FORM 1503 03.82 (P04C01)

Europäisches
Patentamt
European
Patent Office
Office européen
des brevets

# EUROPEAN SEARCH REPORT

Application Number

EP 15 19 2666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADARSH KOWDLE ET AL: "Multiple View Object Cosegmentation Using Appearance and Stereo Cues", 7 October 2012 (2012-10-07), COMPUTER VISION ECCV 2012, SPRINGER BERLIN HEIDELBERG, BERLIN, HEIDELBERG, PAGE(S) 789 - 803, XP047019066, ISBN: 978-3-642-33714-7 * abstract * * page 796, lines 2-3 * * equation 4,5 * * page 796, last paragraph - page 797, paragraph 1 * * page 797, last paragraph * * page 798, line 22 - line 27 * * equation 6 * * page 797, last line - page 798, line 4 * * figure 4d * * page 790, line 15 - line 16 * * page 797, line 4 - line 9 * * page 798, line 5 - line 26 * ----- | 1-12 | |

TECHNICAL FIELDS
SEARCHED    (IPC)

The present search report has been drawn up for all claims

| Place of search | Date of completion of the search | Examiner |
|---|---|---|
| Munich | 26 February 2016 | Winkler, Gregor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **IAN ENDRES ; DEREK HOIEM.** Category Independent Object Proposals. *ECCV,* 2010, vol. 5, 575-588